(19) Europäisches Patentamt

European Patent Office

Office européen des brevets

(11) **EP 1 684 078 A2**

(12) **EUROPEAN PATENT APPLICATION**

(43) Date of publication:
26.07.2006 Bulletin 2006/30

(51) Int Cl.:
*G01N 35/10* (2006.01)  *B01L 3/00* (2006.01)

(21) Application number: 05028659.0

(22) Date of filing: 29.12.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 21.01.2005 JP 2005014493

(71) Applicant: Hitachi High-Technologies Corporation Tokyo (JP)

(72) Inventors:
• Enoki, Hideo, c/o Hitachi, Ltd., Int. Prop. Grou Chiyoda-ku
Tokyo 100-8220 (JP)
• Yamakawa, Hironobu, c/o Hitachi, Ltd., Int. Prop. Chiyoda-ku
Tokyo 100-8220 (JP)
• Harada, Kunio, c/o Hitachi, Ltd., Int. Prop. Group Chiyoda-ku
Tokyo 100-8220 (JP)
• Adachi, Sakuichiro, c/o Hitachi, Ltd., Int. Prop. Chiyoda-ku
Tokyo 100-8220 (JP)
• Mimura, Tomonori c/o Hitachi, Ltd., Int. Prop. Gr Chiyoda-ku
Tokyo 100-8220 (JP)

(74) Representative: Beetz & Partner Steinsdorfstrasse 10
80538 München (DE)

(54) **Chemical analysis apparatus and analysis device**

(57) There are provided a chemical analysis apparatus and an analysis device in which predetermined quantities of a sample (121) and a reagent (421) are presicely pipetted, then are subjected to various processes, and are tested by a test device. Thus, the chemical analysis apparatus comprises the analysis device (2), an oil supply portion (7), a sample pipetting portion (6) and a reagent pipetting portion (4). The analysis device comprises an upper board (23) provided with a common electrode (214), and a lower board (21) provided with a drive electrode (211) including a train of a plurality of electrodes (211a, 211b). Oil (721) is filled in a space (24) defined between the two boards (23, 21), and liquid drops of the sample (121), the reagent (421) and the like are formed in the oil (721). The common electrode (214) is applied thereto with a negative voltage or is grounded while a positive voltage is applied to electrodes (211a, 211b) on the drive electrode side in order to decrease a contact angle in a zone where the voltage are applied to the electrodes, and accordingly, the wettability is enhanced, thereby it is possible to displace the liquid drops.

FIG.3

**Description**

BACKGROUND OF THE INVENTION

Field of the Invention

The present invention relates to a chemical analysis apparatus and a chemical analysis device for analyzing a sample, and in particular to a chemical analysis apparatus and a chemical analysis device for processing a sample and a reagent in utilization of Electro-wetting phenomenon.

Description of the Related Art

Medical or experimental automated analysis apparatuses which are used widely at present, have to have a complicated system incorporating therein many mechanisms, and accordingly, they have limits to miniaturization and lowing of costs thereof.

Meanwhile, in a flow-type μ-TAS analysis device, a reagent is fed into chips from a plurality of inlets of analysis devices while a sample is fed into the chips, the reagent and the sample continuously flowing through passages in the analyzing device so as to be mixed with each other on the passage's way, and thus, an optical absorbance or the like of the thus obtained mixture is detected by a detector. Thus, a rotary mechanism and an agitating mechanism are not required so that the configuration thereof can be simplified.

However, the passages have to be flushed, resulting in a serious problem of contamination. Further, due to feed and replacement of several kinds of liquid, the provision of pumps and valves are required for the respective kinds of liquid, and accordingly, these devices have to use a system which is practically difficult in view of its reliability and costs. Accordingly, in the current flow type μ-TAS analysis device, a number of inspection items for one chip is small, and liquid drive means such as the pumps or the like are provided outside of the device. Thus, the medical analysis apparatus or the like cannot satisfy the requirements of cost reduction.

For example, WO 2004/030820 A2 discloses a method in which a voltage is applied to electrodes provided in an analysis device so as to change the electric wettability EWOD (ElectroWetting On Dielectric), and thereby, displacing a liquid drop. Variation in EWOD is a phenomenon caused by variation in the surface tension or interfacial tension. With the use of the EWOD as stated above, the analysis device has a structure and a mechanism which are greatly simplified.

However, the example disclosed in the WO 2004/030820 A2 can hardly pipette a sample and a reagent, accurately by predetermined quantities, and accordingly, cannot carry out various processes in order to inspect the sample by an inspection unit.

BRIEF SUMMARY OF THE INVENTION

An object of the present invention is to provide a system which can accurately pipette a predetermined amount of a sample and a reagent so as to carry out various processes in order to inspect the sample by an inspection unit

To the end, according to the present invention, there is provided an analysis apparatus that comprises a common electrode formed on an upper board and drive electrodes including a train of plural electrodes formed on a lower board. Oil is filled into a space between the two boards, in which liquid drops of a sample, a reagent or the like are made to be formed, and the common electrode is applied thereto with a negative voltage or is grounded while a positive voltage is applied to an electrode on the drive electrode side. Thus, there is decreased an contact angle of the oil in a zone where the voltage is applied, resulting in an increase in the wettability, and thereby, it is possible to displace the liquid drops.

The drive electrodes comprises circular electrodes, including a train of electrodes arranged along a passage for the liquid drops, and electrodes arranged on both sides of the train, and the adjacent electrodes are formed to be overlapped with each other. Thus, predetermined amounts of the liquid drops of the sample and the reagent are pipetted, and are displaced and mixed. The thus obtained reacted solution is displaced along a predetermined path.

According to the invention, the predetermined amount of the sample and the reagent can be pipetted accurately so as to carry out various processes, thereby it is possible to inspect the sample by an inspection unit.

Other objects, features and advantages of the invention will become apparent from the following description of the embodiments of the invention taken in conjunction with the accompanying drawings.

BRIEF DESCRIPTION OF THE SEVERAL VIEWS OF THE DRAWINGS

Fig. 1 is a view illustrating a configuration of a chemical analysis apparatus according to the present invention;

Fig. 2 is a sectional view illustrating an analysis device;

Fig. 3 is a view illustrating a working fluid reserving portion, a sample pipetting portion and an oil supply portion of the chemical analysis apparatus, as an example, according to the present invention;

Figs. 4A and 4B are views illustrating another example of a sample pipetting portion;

Figs. 5-9 are views for explaining a pipetting operation of a reagent;

Fig. 10 is a view illustrating a reagent pipetting portion of an example of a chemical analysis apparatus according to the present invention;

Fig. 11 is a view illustrating a configuration of electrodes in an analysis device in the chemical analysis apparatus according to the present invention;

Figs. 12A and 12B are views for explaining merits of circular electrodes;

Figs. 13A to 13D are views for explaining a pipetting method with the use of electrodes; and

Fig. 14A to 14C are views illustrating a shape of electrodes adjacent to each other.

## DETAILED DESCRIPTION OF THE INVENTION

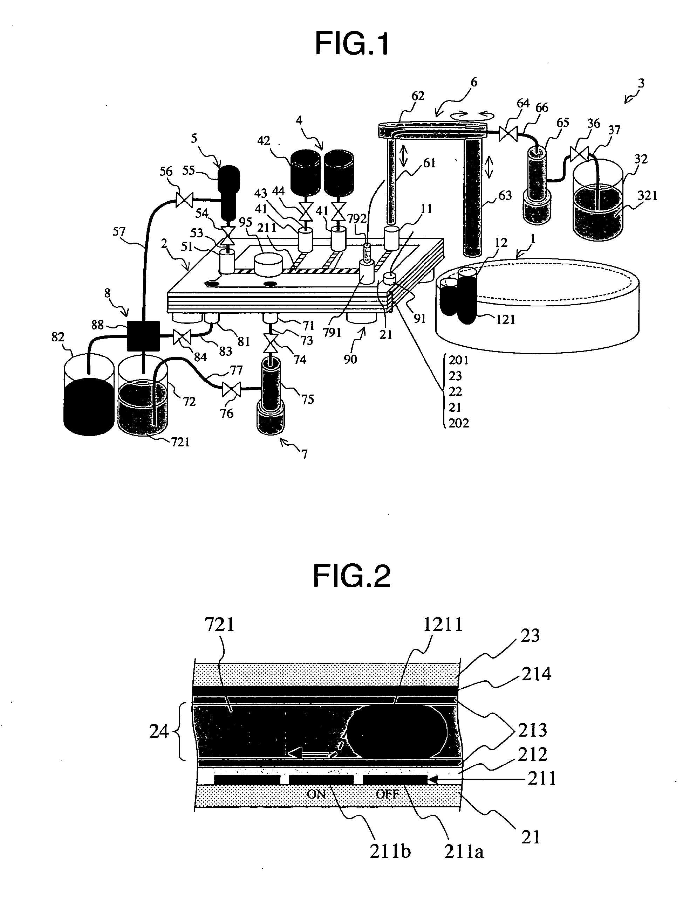

Explanation will be hereinbelow made of an embodiment according to the present invention with reference to Fig. 1. A chemical analysis apparatus in this embodiment of the present invention comprises a rotatable sample disc 1 carrying thereon a plurality of sample cups 12 holding samples to be measured, an analysis device 2 for analyzing components of the sample 121, a working liquid reserving portion 3 for reserving working liquid, a reagent pipetting portion 4 for feeding a reagent into the analysis device 2, a waste liquid discharge portion 5 for discharging used waste liquid from the analysis device 2, a sample pipetting portion 6 for feeding the sample from the sample cups 12 into the analysis device 2, an oil supply portion 7 for feeding oil into the analysis device 2, and an oil separating portion 8 for separating oil and a reacted liquid from the waste liquid.

The sample pipetting portion comprises nozzle 61 extended vertically, an arm 62 supporting the nozzle 61 in a horizontal direction, a pillar 63 vertically extending and supporting the arm 62, a drive mechanism (which is not shown) for rotating the arm 62 around the pillar 63 and moving the same up and down along the pillar 63, and a pump 65. A tube 66 connecting the nozzle 61 and the pump 65 is provided with an inlet valve 64. The nozzle 61 is provided at its distal end with a liquid level sensor (which is not shown).

The working liquid reserving portion 3 has a working liquid container 32 for reserving working liquid 321. A tube 37 connecting the pump 65 with the working fluid container 32 is provided with an outlet valve 36. Pump systems used in other embodiments according to the invention have configurations similar to the pump system in this embodiment. In this embodiment, the pump 65 is a syringe pump. The syringe pump is adapted to suck and discharge fluid into and from a pump chamber by taking a plunger of a syringe which is sealed by O-rings or the like in and out of the pump chamber having a certain volume so as to change the space volume in the pump. In the case of feeding the fluid in one direction, for example, from the inlet side to the outlet side, an inlet valve is opened while an outlet valve is closed, and then the plunger is made to go back from the inside of the pump chamber to the outside so as to suck the fluid through the inlet valve. Then, the inlet valve is closed while the outlet valve is opened, and then the plunger is made to go forward in the pump chamber so as to discharge the fluid through the outlet valve. Thus, the fluid is displaced from the inlet side to the outlet side. In order to feed the fluid in the reverse direction, the opening and closing of the valve are reversely carried out. The following explanation will be made in such a condition that the fluid is displaced in a designated direction by driving the pump, without specifically explaining the operation of the valves.

As the working fluid 321 in the pump system is used a kind of liquid which cannot be resolved by and mixed into the sample 121 and the reagent. In this embodiment, the working liquid 321 is oil.

The analysis device 2 has a structure in which boards are stacked one upon another, having an upper access board 201, an upper electrode board 23 underneath the above, a spacer board 22 underneath the upper electrode board 23, a lower electrode board 21 further underneath the spacer board 22, and a lower access board 202 on a lower side. The spacer board 22 is cut out at the predetermined area, so as to define therein a space. In Fig. 1, the spacer board 22 is cut out except its periphery. Further, the upper access board 201 and the upper electrode board 23 are not shown except their peripheral parts in view of convenient explanation. As shown, a drive electrode 211 is provided on the lower electrode board 21.

The space formed by cutting out the spacer board 22 is filled therein with the oil. The drive electrode 211 has a function of a passage for displacing liquid drops of the sample 121 and the reagent within the oil. The drive of the sample 121 and the reagent in the oil, as mentioned above, is carried out with the use of the EWOD which will be detailed later.

In one or both of the upper access board 201 and the lower access board 202 are incorporated a Peltier element, a heater or the like which can be controlled by control means not shown, so as to control the temperature of the analysis device 2.

The upper access board 201 is provided with a sample port 11, reagent ports 41, a waste port 51, an oil level detecting port 791, a detector 95 and an inclination sensor 91. The oil level detecting port 791 is provided therein with an oil level sensor 792 for detecting the level of the oil retained in the space of the analysis device 2. As the oil level sensor, there may be used any type of well-known technology for detecting a liquid level, such as an optical type for detecting a distance from a liquid surface in view of a reflected quantity of light radiated thereto, an ultrasonic type for detecting a distance from a liquid surface in view of a time by which an ultrasonic wave emitted to the liquid surface is returned or an electrostatic type for detecting an increase in an electrostatic capacity depending upon a contacting length of liquid making contact with an electric wire submerged in the liquid. As the detector 95, there may be used a device for measuring an optical characteristics, such as a light absorbance measuring unit, a fluorescence measuring device or the like. However, there may be also used a device for measuring another physical value such as an electric or magnetic value. In this embodiment, a device for measuring optical characteristics is used.

The lower access board 202 is provided with an oil supply port 71, an oil drain port 81 and an inclination adjusting portion 90.

The above-mentioned ports 11, 41, 51, 791, 71, 81 have cylindrical shapes, each having a cylindrical part defined therein with a cavity piercing through the access boards so as to be communicated with the space.

The inclination adjusting portion 90 may hold the analysis device 2 horizontally or may incline the same at a desired angle. An inclined angle signal obtained by the inclination sensor 91 is delivered to an attitude control mechanism which is not shown and which drives the inclination adjusting mechanism 90 so as to horizontally hold the analysis device 2 or to incline the same at a desired angle.

The altitude control mechanism holds the analysis device horizontally during, for example, a normal operation mode such as a pipetting mode or a measuring mode. When a surface on which the analysis device is mounted is unexpectedly inclined, the analysis device 2 is inclined so as to cancel out the inclination of the surface. In the case of expelling bubbles trapped in the liquid retained in the space in the analysis device 2, in the case of maintenance for replacing oils and so forth, the analysis device is inclined by the attitude control mechanism.

The reagent pipetting portion 4 includes reagent containers 42 for reserving reagents, and nozzles 43 incorporating valves 44 are connected to the bottoms of the reagent containers 42, respectively. The tip ends of the nozzles 43 are located in the reagent ports 41, respectively. It is noted that the reagent pipetting portion 4 may be provided therein with a pump. The waste liquid discharging portion 5 has a waste liquid pump 55 for pumping out waste liquid, which is connected, at its bottom, thereto with a nozzle 53 provided with a valve 54. The tip end of the nozzle 53 is located in the waste liquid port 51. The waste liquid pump 55 is connected with a tube 57 incorporating a valve 56. The oil supply portion 7 includes an oil container 72 for reserving the oil 721, which container is connected to the oil supply port 71 by a tube 77 incorporating a valve 76 and a tube 73 incorporating a pump 75 and a valve 74. The oil separating portion 8 has a separator 88 for separating oil from waste liquid and a waste liquid container 82 for reserving waste liquid. The separator 88 is connected to the oil drain port 81 by a tube 83 incorporating a valve 84. The separator 88 is also connected to the waste liquid pump 55 by a tube 57 incorporating a valve 56. The separator 88 separates oil from the waste liquid by utilizing a conventional technology such a specific weight difference, centrifuge, filtering or the like.

As the oil 721, there may be used a liquid which cannot be dissolved and mixed into the sample 121 and the reagents. As the liquid which is not mixed with the sample 121, there may be used a liquid having a specific weight which is larger and or lower than that of the sample 121. For example, in the case of analyzing a water based solution such as blood as the sample 121, silicon oil or hydrocarbon oil may be used. In such a case that the sample 121 is a liquid other than a fluorine system liquid containing fluorine, perfluorocarbon oil is desirably used, having a specific weight greater than 1. Incidentally, the working fluid 321 may be equal to the oil 721. Explanation will be hereinbelow made in such a condition that the working fluid 321 is equal to the oil 721.

In this embodiment, as the oil 721 or the working fluid 321, fluorine oil having a specific weight greater than 1 is used.

At first, the oil is fed from the oil supply portion 7 into the analysis device 2. The oil supply pump 75 is driven so as to feed the oil 721 from the oil container 72 to the oil supply port 71 from which the oil flows into the space in the analysis device 2. The air occupied in the space is discharged outside from the sample port 11, the reagent port 41, the waste liquid port 51 and the like in the upper access board 201. Thus, the air in the space in the analysis device 2 is replaced with the oil 721. The level of the liquid surface of the oil 721 in the space is detected by the oil level sensor 792 provided in the oil level detecting port 791. When the level of the oil 721 in the space comes up to a predetermined height, the operation of the oil supply pump 75 is stopped by a control device which is not shown. It is noted that oil level sensor 792 always monitors an oil level in the oil level detecting port 791, and accordingly, when it detects that the oil level lowers, it informs the control device of this fact. Thus, the control means drives the oil supply pump 75 in order to replenish the space with the oil. Accordingly, the level of the liquid surface of the oil retained in the space in the analysis device 2 is always maintained to be constant.

The sample port 11 has a bore diameter which is larger than the outer diameter of the nozzle 61 which can be therefore inserted into the sample port 11. When the nozzle 61 is inserted into the sample port 11, the tip end of the nozzle 61 dips into the oil retained in the space in the analysis device 2. Thus, the inner surface of the tip end of the nozzle 61 is covered thereover with the oil 721. Further, the pump 65 is driven so as to suck the oil into the nozzle 61 and then discharge it. Accordingly, the inner surface of the nozzle 61 is covered with the oil 721. Thus, when the sample 121 is sucked into the nozzle 61, the oil repels the sample 121 so as to prevent contamination to the surface of the nozzle 61. Thereby, the pipetting of the sample 121 is carried out after the tip end of the nozzle 61 is covered with the oil 721.

Next, the sample pipetting portion 6 pipettes the sample into the analysis device 2. The arm 63 is pivoted around the pillar 63 by the drive mechanism, and when the nozzle 61 comes to a position of a desired sample cup 12, the arm 62 is lowered along the pillar 63. The liquid level sensor provided in the nozzle 61 detects the liquid surface of the sample 121, and the nozzle 61 is sunk thereinto to a predetermined depth. The pump 65 is driven to suck a predetermined quantity of the sample 121, and thereafter, the operation of the pump 65 is stopped. The arm 62 is raised by the drive mechanism, and is then rotated. When the nozzle 61 is located at the position of the sample port in the analysis device 2, the arm 62 is lowered along the pillar 63. When the nozzle 61 is located in the sample port 11, the pump 65 is driven to discharge the sample 121 into the sample port 11. The sample 121 fed into the sample port 11 is laid on the oil without being mixed with the oil.

Next, the reagent pipetting portion 4 pipetts the reagent into the analysis device 2. When the vale 44 is opened, the reagent is discharged from the reagent container 42 into the reagent port 41. The reagent fed into the reagent port 42 is laid on the oil without being mixed therewith.

A valve (which is not shown) is provided on the upper surface of each of the reagent containers 42 of which the inside is therefore communicated with the atmosphere, and accordingly, a reagent in the reagent container 42 flows into the reagent port 41 under the gravitation. When a flow volume of the reagent is adjusted depending upon an opening time of the valve 44. When the reagent is fed into space in the analysis device 2, the liquid level in the oil liquid level detecting port 791 varies. The thus obtained variation value is detected by the oil level sensor 792 so as to calculate a quantity of the reagent having flown into, and when a desired quantity of the reagent is fed, the valve 11 may be closed.

The sample 121 fed into the sample port 11 and the reagent fed into the reagent port 41 are processed by using the EWOD. That is, they are displaced along the drive electrode 211 in the form of liquid drops. The sample and the reagent are mixed with each other in a predetermined zone on the drive electrode 211 so as to execute a predetermined chemical reaction. After the completion of the chemical reaction, they are fed to the detector 95.

The detector 95 measures predetermined optical characteristics such as a degree of light absorbance of the reacted solution or a degree of fluorescence. In this embodiment, the detector 65 detects a light quantity, and accordingly, holes are formed in the upper and lower access boards 201, 202 at a position where the detector 95 is located. One or both of the upper and lower electrode boards 23, 21 are made of transparent electric materials such as ITO (Indium-Tin-Oxide).

Waste liquid having been measured by the detector 95 is displaced along the drive electrode 211, and is fed into the waste liquid port 51.

Next, the waste liquid is discharged from the analysis device 2 by the waste liquid discharging portion 5. The waste liquid comes up in the waste liquid port 51 with a specific weight different between itself and the oil, and stagnates therein.

The waste liquid pump 55 is driven so as to pump up the waste liquid from the waste liquid port 51 into the separator 88 for separating the oil from the waste liquid. The separated oil is recovered into the oil container 72 while the remaining waste liquid is discharged into the waste liquid container 82.

If the specific weight of the oil 721 is less than that of the waste liquid, a waste liquid port (which is not shown) is formed in the lower access board 202. The waste liquid descends with the specific weight difference between itself and the oil, and stagnates. The waste liquid is sucked up by a waste liquid pump (which is not shown) through a tube (which is not shown) connected to the waste liquid port 51, and is then fed into the oil separating portion 8.

In the case of discharging all oil 721 from the analysis device 2 during maintenance or the like, it is sufficient to open the valve 84. The oil 721 in the analysis device 2 is discharged under the gravitation by way of the oil drain port 81, and is then fed into the separator 88 for removing the waste liquid contained in the oil, and accordingly, the oil is recovered into the oil container 72 while the waste liquid is discharged into a waste liquid container 82. The analysis device 2 is inclined by the inclination adjusting portion 90 so that the oil drain port 81 takes its lowermost potion. Thus, the oil in the analysis device 2 is completely discharged.

In this embodiment, before the sample is pipetted by the sample pipetting portion 6, the tip end of the nozzle 61 can be covered with the oil so as to prevent the sample from sticking to the nozzle 61. Accordingly, the sample sucked into the nozzle 61 is prevented from being mixed with a sample which was pipetted during the last measurement, thereby it is possible to enhance the degree of accuracy of measurement. Further, since the nozzle is prevented from being contaminated with the sample, it is not necessary to wash the nozzle. Thus, no nozzle washing mechanism is required, thereby it is possible to miniaturize the chemical analysis apparatus and to reduce the costs thereof.

In this embodiment, since the oil level sensor 792 is provided in the oil level detecting port 791, the quantity of a solution such as the sample or the reagent fed into the analysis device can be precisely controlled. Thus, it is possible to enhance the accuracy of pipetting into the analysis device.

Further, it is possible to detect a decrease and a consumption of the oil by the oil level sensor 792, and accordingly, the oil quantity in the analysis device can be maintained to be constant. Thus, even though the analysis device in the embodiment is used for a long time, the oil quantity in the analysis device is always maintained to be always constant, air bubbles can be prevented from being mingled into the oil, and simultaneously, the oil can be automatically updated. Further, with the provision of the oil separating portion, the oil can be recovered, thereby it is possible to reduce the consumption of the oil.

The essential feature of the present invention is the provision of the analysis device, and accordingly, the components other than this device may be replaced with suitable ones. For example, a sample may be pipetted into the sample port 11 manually, instead of using the sample pipetting portion 6. Further, the reagent may be pipetted manually, instead of using the reagent pipetting portion 4. Similar to the sample disc 1, the reagent may be pipetted from a rotatable reagent disc carrying thereon a plurality of reagent containers with the use of the sample pipetting portion 6.

Detailed explanation will be hereinbelow made of the structure of the analysis device 2 with reference to Fig. 2 which is a sectional view illustrating the structure of the analysis device 2, in which the upper access board 201 at the top and the lower access board 202 at the bottom are not shown. The common electrode 214 is provided at the inner surface of the upper electrode board 23 while the drive electrode 211 including a plurality of electrodes 211a, 211b is provided at the inner surface of the lower electrode board 21. One or more layers of an insulator film 212 are provided on the outer surface of the drive electrode 211. The insulator film 212 is coated thereover with a water repelling film 213 for enhancing water repellence. The common electrode 214 is coated thereover with only the water repelling film 213.

The insulator film 212 may be a dielectric film, being made of Parylen (Trade Name) or $SiO_2$ by means of a CVD process. The water repelling film 213 may be a coating of a fluorine system repellant such as AF1601 (Trade Name).

Between the upper electrode board 23 and the lower electrode board 21, there is arranged a spacer board 22 which is removed or cut out in its predetermined zone. The zone where the spacer board 22 is cut out, defines a space 24. As shown, the oil 721 is filled in this space 24, and is contained therein with a liquid drop 1211 of the sample. The liquid drop 1211 is laid on the electrode 211a and covers in part over the electrode 211b adjacent thereto. A negative voltage is applied to the common electrode 214. When a positive voltage having been applied to the electrode 211a is cut off while a positive voltage is applied to the adjacent electrode 211b, the wettability of the insulator film 212 on the electrode 211b becomes higher so as to decrease the contact angle. Accordingly, the liquid drop 1211 is attracted to the adjacent electrode 211b which is applied with the positive voltage. As a result, the liquid drop 1211 is displaced onto the adjacent electrode 211b. With the repetitions of the above-mentioned steps between the adjacent electrodes, the liquid drop 1211 is successively displaced along the drive electrode 211.

In this specification, the above-mentioned phenomenon will be referred to as "EWOD". The EWOD is defined as a phenomenon that the contact angle between an insulator film on an electrode and a liquid is decreased by applying a voltage between two electrodes between which the liquid such as water to be polarized is interposed, and accordingly, the wettability is enhanced. Thus, in this embodiment, the sample and the reagent can be displaced along the drive electrode 211 by the EWOD technology and mixed with each other in a predetermined zone. The mixture of the sample and the reagent is transferred below the detector 95 for detecting light.

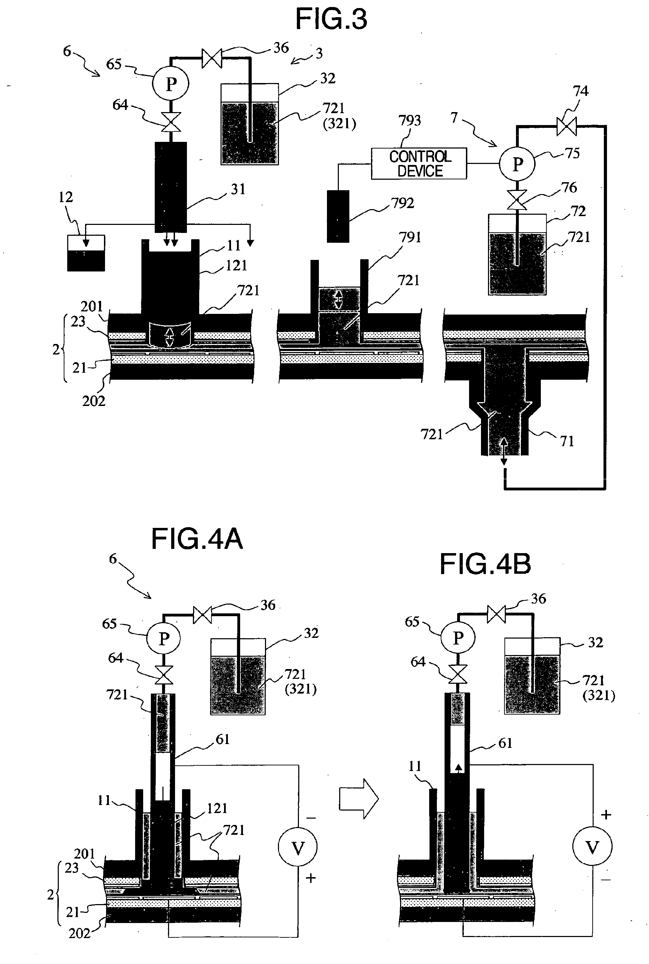

Fig. 3 exemplifies the working fluid reserving portion 3, the sample pipetting portion 6 and the oil supply portion 7 in the chemical analysis apparatus according to the present invention. At first, explanation will be made of the oil supply portion 7. In this embodiment, fluorine oil is used as the oil 721, and the oil 721, namely, fluorine oil, is used as the working fluid. The syringe pump 75 is driven so as to feed the oil 721 from the oil container 72 into the oil supply port 71 by way of the syringe pump 75. The oil fed into the oil supply port 71 is led into the space 24. The level of the liquid surface of the oil in the oil level detecting port 791 is detected by the oil level detecting sensor 792. The level of the oil detected by the oil level detecting sensor 792 is inputted into the control device 793. When the level of the oil in the oil level detecting port 791 becomes a predetermined height, the operation of the pump 75 is stopped.

Next, explanation will be made of the sample pipetting portion 6. The oil 721 is reserved in the working fluid container 32. The syringe pump 75 is driven so as to fill the oil 721 up to a position in the vicinity of the tip end of the nozzle 61. The nozzle 61 is inserted into an arbitrary sample cup 12 on the sample disc 1 and the syringe pump 65 is driven so as to suck the sample 121 into the nozzle 61. The nozzle 61 is shifted to a position above the sample port 11, and then, the syringe pump 65 is driven so as to discharge the sample 121. A pipetting quantity of the sample 121 may be adjusted, depending upon a displacement of the plunger in the syringe pump 65.

The specific weight of the fluorine oil is about 2 while the specific weight of the water based sample 121 is about 1. Since the oil 721 and the sample 121 are never mixed with each other, the sample 121 led into the sample port 11 floats on the oil 721. Before the sample 121 is pipetted, the liquid level in the sample port 11 is equal to the level of the oil in the oil level detecting port 791. After the sample 121 is pipetted, the level of the liquid surface in the sample port 11 is higher than the level of the oil in the oil level detecting port 791. Accordingly, the height of the sample port 11 is set to a predetermined value which can prevent the sample 121 from overflowing from the sample port 11 after the sample 121 is pipetted.

Next, the syringe pump 75 in the oil supply portion 7 is driven so as to suck the oil 721 in the space 24 in the analysis device 2 so as to return the oil into the oil container 72. Thus, the liquid level in the sample port 11 is lowered, and accordingly, the interface between the sample and the oil comes to the upper electrode board 23. The level of the oil in the oil level detecting port 791 is also lowered. The liquid level in the sample port 11 is above the level of the oil in the oil level detecting part 791, but the interface between the sample and the oil in the sample port 11 is below the level of the oil in the oil level detecting port 791.

With the assumption that the lower electrode board 21 is horizontal, heights of the liquid levels are measured from the position of the lower electrode board 21 as a reference. It is noted that affection by meniscus is negligible, and it is estimated that the liquid surfaces are horizontal. The following formula is obtained:

$$\rho_s * h_s + \rho_0 * h_{0s} = \rho_0 * h_0 \qquad\qquad (1)$$

where $\rho_s$ is a specific weight of the sample 121, $h_s$ is a length of a liquid column of the sample 121, $\rho_0$ is a specific weight of the oil 721, $h_{0S}$ is a height of the interface between the oil 721 and the sample 121, and $h_0$ is a level of the oil in the oil level detecting port 791.

Thus, a difference between the height $h_{0s}$ of the interface between the oil 721 and the sample 121, and the level of the oil $h_0$ in the oil level detecting port 791 is exhibited by the following formula:

$$h_0 - h_{0s} = (\rho_s/\rho_0) * h_s \qquad\qquad (2)$$

That is, the difference between the height $h_{0S}$ of the interface and the level $h_0$ of the oil is about one half of the length of the liquid column of the sample. Thus, until the liquid level is lowered by a half of the length of the liquid level of the sample, the oil 721 may be sucked. Further, if the oil 721 in the space 24 within the analysis device 2 is continuously sucked, the sample 121 enters into the space 24 in the analysis device 2, passing by the connection between the lower end of the sample port 11 and the upper electrode board 23. If the quantity of the sample fed into the sample port 11 is sufficient, no air enters into the space in the analysis device 2 from the oil level detecting port 791 even thought the liquid level in the oil level detecting port 791 is lowered. The sample 121 having entered in the space in the analysis device 2 is laid on the drive electrode 211 on the lower electrode board 21, and accordingly, it may be displaced by the above-mentioned EWOD.

Thus, a predetermined quality of the sample 121 is pipetted into the space in the analysis device 2. After completion of pipetting of the sample, the syringe pump 75 in the oil supply portion 7 is driven so as to fill the oil 721 into the space in the analysis device 2 from the oil supply port 71. Accordingly, the liquid level in the sample port 11 and the oil level in the oil level detecting port 791 come up. The sample remaining in the sample port 11 overflows from the upper end of the sample port 11 and then falls onto the upper access board 201. If the height of the sample port 11 is lower than that of the oil level detecting port 791, all sample remaining in the sample port 11 may be discharged. A discharge channel may be provided on the upper access board 201 around the sample port 11. The sample and the oil having fallen in this discharge channel are led into the oil separating portion 8. Alternatively, the sample remaining in the sample port 11 may be sucked by the nozzle 61 of the sample pipetting portion 6 so as to discard it into an external waste liquid container.

In this embodiment, the sample and the oil respectively form separate layers in the sample port 11, and they are never mixed with each other. Accordingly, unnecessary sample may be discarded or recovered through simple operation. In this description, explanation has been made of the pipetting operation of the sample 121, and the reagent may be also pipetted by a similar operation.

Explanation will be hereinbelow made of another embodiment of the sample pipetting portion 6 according to the present invention with reference to Figs. 4A and 4B. The nozzle 61 is coated over its part which is in the vicinity of the tip end thereof and which makes contact with the liquid, with a fluorine system film (which is not shown). The oil 721 in the working fluid container 32 is filled up to a position in the vicinity of the tip end of the nozzle 61. The nozzle 61 is inserted into any one of the sample cups 12 on the sample disc 1, and the syringe pump 65 is driven so as to suck the sample 121 into the nozzle 61. Then, the nozzle 61 is shifted to a position above the sample port 11, and is then inserted into the sample port 11 so that the tip end of the nozzle 61 approaches the lower electrode board 21. Next, the syringe pump 65 is driven so as to discharge the sample 121 from the nozzle 61.

Referring to Fig. 4A which shows such a condition that the sample 121 has been discharged from the nozzle 61, in this embodiment, the a voltage is applied between the nozzle 61 of the sample pipetting portion 6 and the drive electrode 211 on the lower electrode board 211, right below the nozzle 61. In this embodiment, the nozzle 61 serves as the common electrode.

A positive voltage is applied to the electrode on the lower electrode board 21 while a negative voltage is applied to the nozzle 61. Instead of applying the negative voltage to the nozzle 61, the nozzle 61 may be grounded.

Thus, the sample 121 is attracted to the drive electrode on the lower electrode board 21 under the EWOS phenomenon, and is then advanced along the drive electrode in the space within the analysis device 2.

After a predetermined quantity of the sample 121 is pipetted by into the space in the analysis device 2, as shown in Fig. 4B, a negative voltage is applied to the drive electrode on the lower electrode board 21 while a positive voltage is applied to the nozzle 61. In stead of applying a negative voltage to the drive electrode on the lower electrode board 21, the drive electrode may be grounded. Accordingly, the sample 121 is attracted to the nozzle 61 under the WEOD phenomenon. Then, the syringe pump 65 is driven to suck the sample 121 into the nozzle 61.

The sample 121 in the space within the analysis device 2 is retracted while it is attracted from the drive electrode side to the nozzle 61 side, and is returned into the nozzle 61, being separated from the drive electrode. When the sample is separated from the drive electrode, a slight variation in potential or current occurs. Thus, by detecting the variation in potential or current, it is found that the sample 121 is separated from the drive electrode. After the sample 121 is separated from the drive electrode, the operation of the syringe pump 65 is stopped so as to stop the suction of the sample 121.

The nozzle 61 is lifted up from the sample port 11 and is shifted into a sample discarding place which is not shown, and the syringe pump 65 is driven so as to discharge the sample 121 from the nozzle 61. In this embodiment, since the oil 721 is used as the working fluid 321, the syringe pump is continuously driven until the oil 721 is discharged from the tip end of the nozzle 61, and accordingly, the sample 121 is completely discharged from the nozzle 61.

According to this embodiment, by enhancing the wettability of the surface of the nozzle under the EWOD during the discharge of the sample, the sample is attracted to the nozzle so as to be smoothly returned. Thus, no sample remains in the analysis device so as to prevent affection upon measurement for another sample, thereby it is possible to enhance the accuracy of measurement.

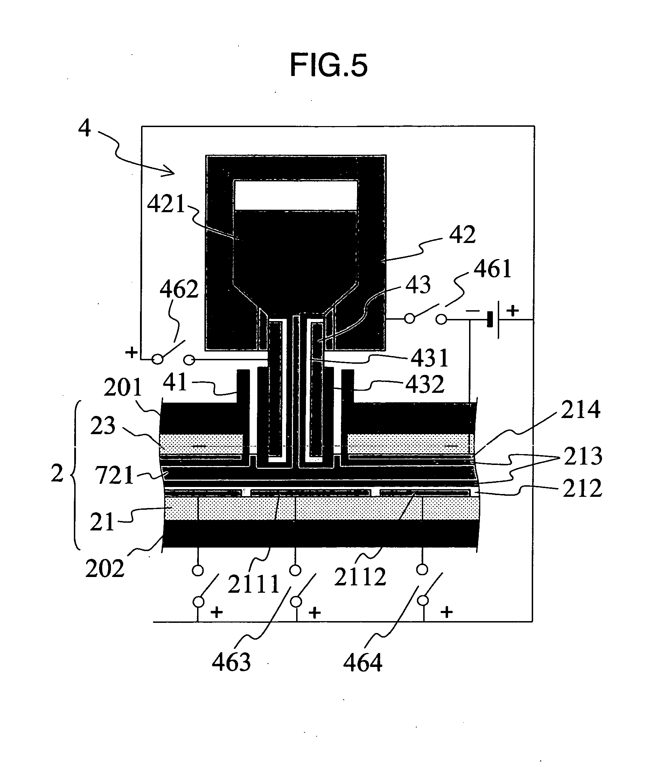

Explanation will be hereinbelow made of the configuration and operation of the reagent pipetting portion 4 according to the invention with reference to Figs. 5 to 9. The structure of the analysis device 2 is the same as that explained with reference to Fig. 2. The upper access board 201 at the top and the lower access board 202 at the bottom are not shown. A common electrode 214 is provided at the inner surface of the upper electrode board 23 while a drive electrode including a plurality of electrodes 2111, 2112 is provided at the inner surface of the lower electrode board 21. An insulator film 212 is formed over the drive electrode. The insulator film 212 is coated thereover with a water repelling film 213. The common electrode 214 is coated thereover with a water repelling film 213 alone.

The nozzle 43 at the lower end of the reagent container 42 is inserted into the reagent port 41 so that the tip end of the nozzle 43 is adjacent to the lower electrode board 21.

The nozzle 43 is coated over its upper end surface, inner surface and lower end surface with an insulator film 431 formed of a dielectric thin film. Further, the insulator film 431 on the nozzle 43 and the outer surface of the nozzle 43 are coated thereover with a fluorine system water repelling film 432. Thus, the nozzle 43 which is coated thereover with the insulator film 431 and the water repelling film 432 is attached to the lower end of the reagent container 42 by bonding or the like.

The nozzle 43 and the reagent container 42 which are made of conductive materials such as stainless steel, are electrically isolated from each other by the insulator film 431. The nozzle 43 is electrically isolated from the common electrode 214 by the insulator film 431.

The reagent container 42 is provided at its upper surface with a valve (which is not shown) which is normally closed. When this valve is opened, the reagent container 42 is communicated with the atmospheric pressure or a pressure source (which is not shown).

In this embodiment, the reagent container 42 serves as a common electrode while the nozzle 43 serves as a drive electrode. Accordingly, the reagent container 42 is connected to a negative electrode of a power source through a switch 461. The nozzle 43 is connected to a positive electrode of the power source through a switch 462. The electrodes 2111, 2112 are connected to a positive electrode of the power source through switches 463, 464, respectively. The common electrode 214 at the inner surface of the upper electrode board 23 is connected to the negative electrode of the power source.

In the case of the reagent container 42 which is made of nonconductive materials, a terminal (which is not shown) is provided in the reagent container 42, making contact with the reagent 421, and is connected to the negative electrode of the power source by a lead wire led out from the terminal to the outside, through a switch 461.

Referring to Fig. 5 which shows such an initial condition that all switches are turned off, the oil 721 enters into the nozzle 43 from the space in the analysis device 2 since the nozzle 43 is coated with the fluorine system water repelling film 432.

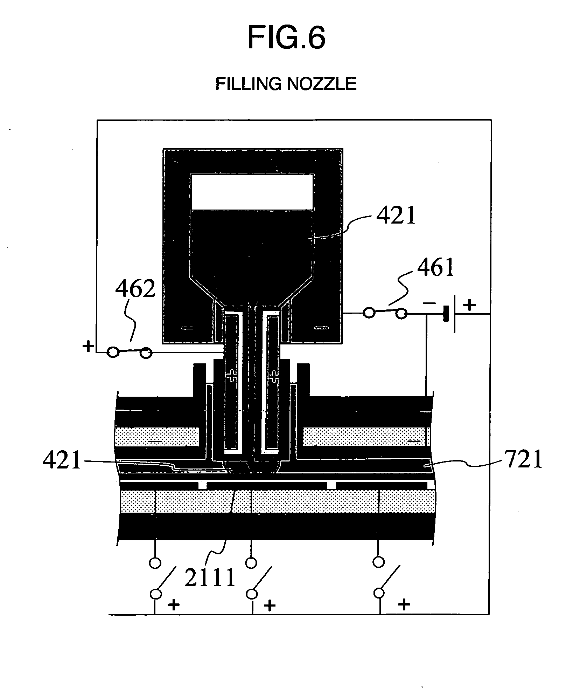

As shown in Fig. 6, at first, the switch 461 connected to the reagent container 42 is turned on, and then the switch 462 connected to the nozzle 43 is turned on. Thus, the reagent 421 in the reagent container 42 has a negative potential, that is, is grounded while the nozzle 43 has a positive potential. Thus, the wettability of the inner surface of the nozzle 43 is enhanced with respect to the reagent 421. The reagent 421 comes down through the nozzle 43 and then into the space in the analysis device 2, and accordingly, it is laid on the drive electrode 2111 on the lower electrode board 21, right below the nozzle 43. The reagent 421 spreads over when it enters in the space within the analysis device 2 from the lower end of the nozzle 43, and the discharge of the reagent is ceased sine the interfacial tension between the reagent 421 and the oil 721 exhibits a reaction force.

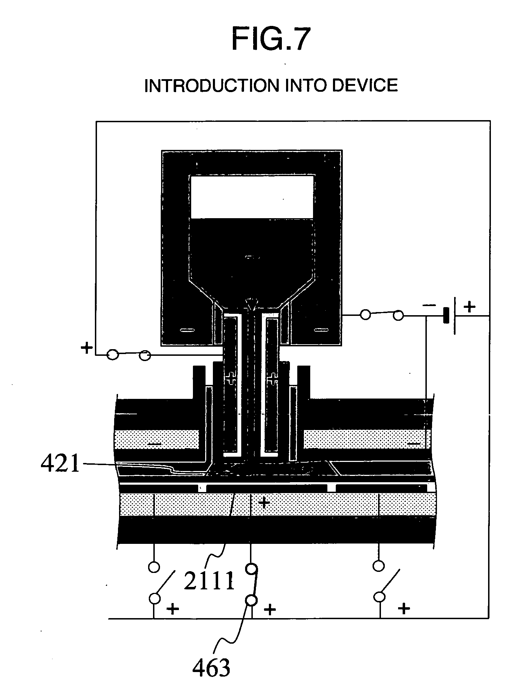

Next, as shown in Fig. 7, the switch 463 for the electrode 2111 direct below the nozzle 43 is turned on. The electrode 2111 is applied thereto with a positive voltage, and the wettability in the zone of the electrode 2111 is enhanced with respect to the reagent 421. Thus, the reagent 421 spreads on the electrode 2111.

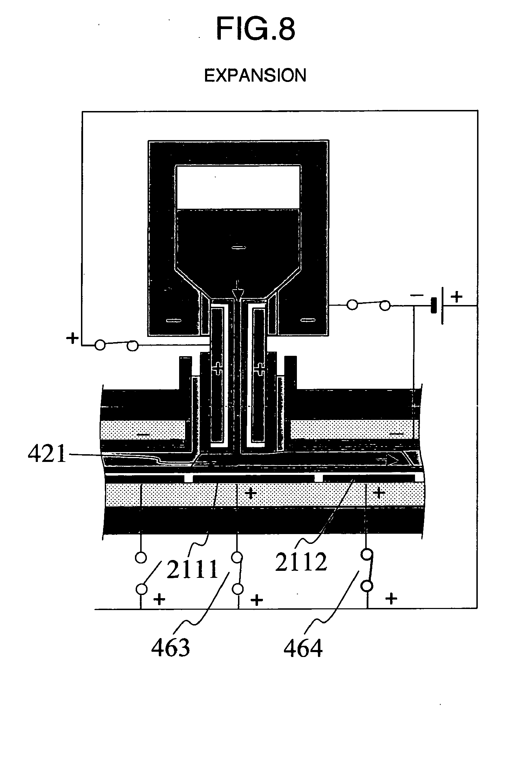

As shown in Fig. 8, when the adjacent switch 464 is also turned on, the adjacent electrode 2112 is applied thereto with a positive voltage so as to enhance the wettability in the zone of the electrode 2112. Accordingly, the reagent 421 expands on the electrode 2112.

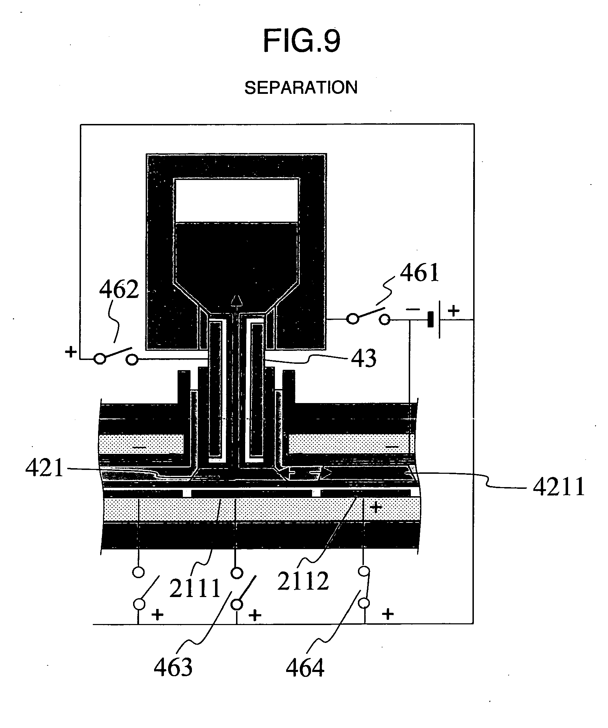

Next, as shown in Fig. 9, when the switch 463 direct below the nozzle 43 is turned off so as to cut off the voltage to the electrode 2111 direct below the nozzle 43, the wettability in the zone of the electrode 2111 is lowered. Since the wettability in the zone of the adjacent electrode 2112 is still high, the reagent 421 is attracted toward the electrode 2112. Thus, the reagent is separated into reagent liquid drops 4211. Further, when the switches 461, 462 are turned off so as to cut off the voltage applied to the nozzle 43, the reagent 421 remaining direct below the nozzle 43 comes up to the nozzle 43 and returns into the reagent container 42.

In this embodiment, control for a hydraulic pressure and a surface tension is important. At first, consideration will be made of the displacement of the liquid in the nozzle 43. A ratio $P\sigma/Ph$ between a vertical component $P\sigma$ of the surface tension and a vertical force $Ph$ obtained by the hydraulic pressure is exhibited by the following formula:

$$P\sigma/Ph = 2\pi r\sigma\cos\theta/\pi r^2 P = 2\sigma\cos\theta/rP \qquad (3)$$

where r is a bore diameter of the nozzle 43, $\sigma$ is an interfacial tension between the reagent 421 and the oil 721, $\theta$ is a contact angle and P is a hydraulic pressure at the interface between the reagent 421 and the oil 721.

In such a case that the above-mentioned ratio is greater than 1 while the interfacial tension acts upward, the reagent 421 comes up through the nozzle 43. The inner diameter of the reagent container 42 is sufficiently larger than the bore diameter of the nozzle 43, and accordingly, an ascent of the level of the liquid surface in the reagent container 42 due to an ascent of the reagent 421 is negligible. Thus, the hydraulic pressure (water head difference) at the interface between the reagent 421 and the oil 721 decreases corresponding to the distance that the reagent 421 comes up in the nozzle 43. The smaller the hydraulic pressure (water head difference) at the interface is, the smaller the ratio exhibited by the formula 3 is, and the reagent 421 within the nozzle 43 returns into the reagent container 42. Since the diameter abruptly increases at a joint which is a transition from the nozzle 43 into the reagent container 42, the ratio exhibited by the formula 3 abruptly decreases, becoming not greater than 1, and accordingly, the oil 721 is never displaced from the nozzle 43 to the reagent container 42.

Further, in such a case that the ratio exhibited by the formula 3 is less than 1, the reagent 421 comes down through the nozzle 43. A descent of the level of the liquid surface in the reagent container 42 due to the descent of the reagent 421 is negligible. Accordingly, the hydraulic pressure (water head difference) at the interface becomes large, corresponding to a distance that the reagent 421 comes down. The larger the hydraulic pressure (water head difference) at the interface is, the smaller the ratio exhibited by the formula 3 is, and the reagent 421 comes down, through the nozzle 43, to the lower end of the nozzle 43. An increment of the hydraulic pressure at the lower end of the nozzle 43 is in proportion to a length L of a liquid column of the reagent in the nozzle 43. Thus, the hydraulic pressure at the lower end of the nozzle 43 becomes $P0 + kL$ where P0 is a hydraulic pressure at the interface, and k is a proportional constant.

The contact angle $\theta$ is from 130 to 140 deg., in the case of application of no voltage. In such a case that the interface between the reagent and the oil is located in the inlet at upper end of the nozzle 43 and no voltage is applied to the nozzle 43, the ratio exhibited by the formula 3, that is, (vertical component of the interfacial tension)/(hydraulic pressure (nozzle)), is not less than 1. When a positive voltage is applied to the nozzle 43, the contact angle $\theta$ is decreased so that the vertical component $P\sigma$ of the interfacial tension decreases. If the contact angle $\theta$ becomes smaller than a predetermined value, the ratio exhibited by the formula 3 becomes smaller than 1. If the contact angle $\theta$ is set to $\theta_0$ with which the ratio exhibited by the formula 3 is smaller than 1, the contact angle $\theta=\theta_0$ satisfies the following formula 4:

$$\theta = \theta_0 < \cos^{-1}(rP_0/2\sigma) \qquad (4)$$

Thus, the nozzle 43 is applied with a voltage so that the contact angle $\theta$ becomes $\theta_0$. Thus, the reagent comes down through the nozzle 43, and enters into the space in the analysis device 2 where it spreads over in a circular shape.

When the circle of the reagent has a radius R, and a gap (height) between the upper common electrode 214 and the lower drive electrode 211 is H, a ratio between an interfacial tension Hσ and a hydraulic pressure Ph is given from the following formula, with such assumption that the gap (height) H is sufficiently smaller than the water head difference and the hydraulic pressure is uniform in the space within the analysis device 2:

$$\text{H}\sigma/\text{Ph} = 2 \times 2\pi\text{R}\sigma\cos\theta/2\pi\text{RHP} = 2\rho\cos\theta/\text{HP} \qquad (5)$$

If the ratio is larger than 1, the reagent 421 cannot spread over in the space within the analysis device 2. If the ratio is smaller than 1, the reagent 421 spreads over in the space within the analysis device 2. In order to set the ratio to a value greater than 1, the contact angle θ is set to be larger than a predetermined value. At the end, a condition in which the reagent comes down through the nozzle 43 but does not spread over in the space within the analysis device 2 is such that the contact angle θ has to satisfy the following formula 6:

$$\cos^{-1}\{\text{H}(\text{P}_0 + \text{kL})/2\sigma\} < \theta < \cos^{-1}(\text{rP}_0/2\sigma) \qquad (6)$$

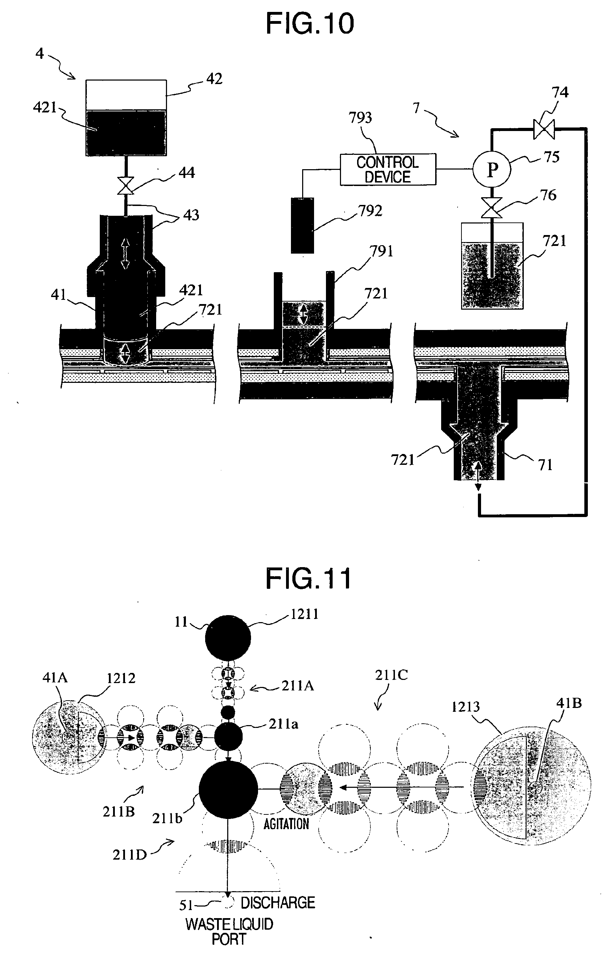

where $(\text{P}_0 + \text{kL})$ is a hydraulic pressure in the space within the analysis device 2.
Fig. 6 shows such a condition that the reagent comes down through the nozzle 43 and enters into the space in the analysis device 2, but it does not spread over therein. Next, as shown in Fig. 7, in order to additionally feed the reagent 421 into the space in the analysis device 2, a voltage is applied to the electrode 2111 on the lower electrode board 21 direct below the reagent port 41 so as to enhance the wettability of the electrode 2111. By applying a positive voltage to the electrode 2111, the contact angle θ is decreased and the ratio exhibited by the formula 5, that is, (interfacial tension)/(hydraulic pressure (device)) becomes less than 1. Thus, the reagent 421 spreads over in the space within the analysis device 2.
By detecting a variation in the voltage, the electric capacity or the like between the reagent 421 and the electrode 211, entrance of the reagent 421 into the space in the analysis device is determined. As shown in Fig. 8, when the reagent 421 covers entirely over the adjacent electrode 2112, the application of the voltage to the electrode 2111 is stopped. Thus, the wettability of a zone other than that of the electrode 2112 applied thereto with a voltage becomes lower. Accordingly, as shown in Fig. 9, the reagent 421 around the electrode 2111 is attracted back toward the nozzle. In order to ensure the backward attraction, the inside of the reagent container 42 may be connected to a negative pressure source which is not shown. Thereby, the reagent 421 is surely returned into the reagent container 42.
Thus, the reagent 421 is separated so as to form a liquid drop 4211 of the reagent on the electrode 2112. The drop of the reagent is further separated into a predetermined quantity of the liquid drops through the pipetting operation under the EWOD.
For example, estimation is made such that the bore diameter r of the nozzle 43 is 0.2 mm, the interfacial tension σ is 0.07 N/m which is substantially equal to that of the water, and the water head P is 10 mmH₂O. When no voltage is applied to the nozzle 43, the ratio exhibited by the formula 3, that is, (vertical component of interfacial tension)/(hydraulic pressure (nozzle)) is = 5.3 if the contact angle is θ = 140 deg. Thus, the reagent 421 does not come down through the nozzle 43.
Next, the nozzle 43 is applied thereto with a voltage so that the contact angle is θ < 99 deg., and accordingly, the hydraulic pressure overcomes the interfacial tension. Thus, the ratio exhibited by the formula 5, that is, (vertical component of interfacial tension)/(hydraulic pressure) is < 1. Thus, the reagent 421 comes down through the nozzle 43.
Further, it is estimated that the gap between the upper common electrode 214 and the lower drive electrode 211 is H = 0.3 mm, and the length of the nozzle 43 is L = 10 mm. When no voltage is applied to the drive electrode 2113 on the lower electrode board 21, the contact angle is θ = 140 deg., and accordingly, (interfacial tension)/(hydraulic pressure (device)) is =1.8. Thus, the reagent 421 does not enter into the space in the analysis device 2.
When a voltage is applied to the drive electrode 213 so that the contact angle is θ < 116 deg., (interfacial tension)/(water pressure (device)) becomes less than 1, and accordingly, the reagent 421 enters into the space in the analysis device 2.
In this embodiment, the electrodes are used in the mechanism for pipetting the reagent, and the wettability of the electrodes are controlled, depending upon a voltage applied to the electrodes. Thus, a desired quantity of the reagent or the like may be pipetted. Accordingly, no moving component is present, thereby it is possible to simplify the mechanism and to miniaturize the apparatus.
Explanation will be made of the configuration and the operation of the reagent pipetting portion 4 in the chemical analysis apparatus according to the present invention, with reference to Fig. 10. The reagent pipetting portion 4 in this embodiment pipettes the reagent 421 with the use of the oil supply portion 7, similar to the sample pipetting portion 6 as shown in Fig. 3. It is noted that the oil supply portion 7 used in this embodiment has the same configuration as that shown in Fig. 3, and accordingly, detailed explanation thereof will be omitted.

The reagent pipetting portion 4 in this embodiment has a reagent container 42 which reserves therein the reagent, and a nozzle 43 incorporating a valve 44 and connected to the bottom of the reagent container 42. The tip end of the nozzle 43 is located in the reagent port 41.

The reagent container 42 is provided for each reagent port 41. The reagent 421 is fed in response to opening and closing of the valve 44. The feed quantity of the reagent 421 may be adjusted through the detection of variation of the level of the liquid surface by means of an oil level sensor 792 provided in the oil level detecting port 791. It is noted that the time of opening and closing the valve 44 may be set depending upon data obtained from a relationship between an opening time of the valve 44 and the feed quantity, which has been previously obtained. Further, a potential or a current between the electrode 2111 and the reagent 421 in the space within the analysis device 2 may be measured in order to detect a flow-down quantity of the reagent 421. Further, with the provision of a micropump, as disclosed in JP-11-082309 A, at the bottom of the reagent container 42, the reagent 421 may be fed after discharging it in the air.

In the embodiment shown in Fig. 3, the sample pipetting by the sample pipetting portion 6 utilizes the oil supply portion 7. In this embodiment, since the reagent pipetting by the reagent pipetting portion 4 may also utilizes the oil supply portion 7, and the availability of the oil supply portion 7 is enhanced thereby it is possible to simplify the configuration of the apparatus and to reduce the costs thereof.

Next, referring to Fig. 11, explanation will be made of a pattern of the drive electrode 211 according to the present invention. The drive electrode 211 is formed so as to connect the sample port 11, the reagent ports 41A, 41B and the waste liquid port 5 to one another. A train 211A composed of one row of circular electrodes in view of the sample port 11 as an original point is provided, but a train 211B, 211C each composed of a row of circular electrodes in view of the reagent ports 41A, 41B as a reference as an original point are provided while a train 211D composed of one row of circular electrodes in view of the waste liquid port 51 as an original point.

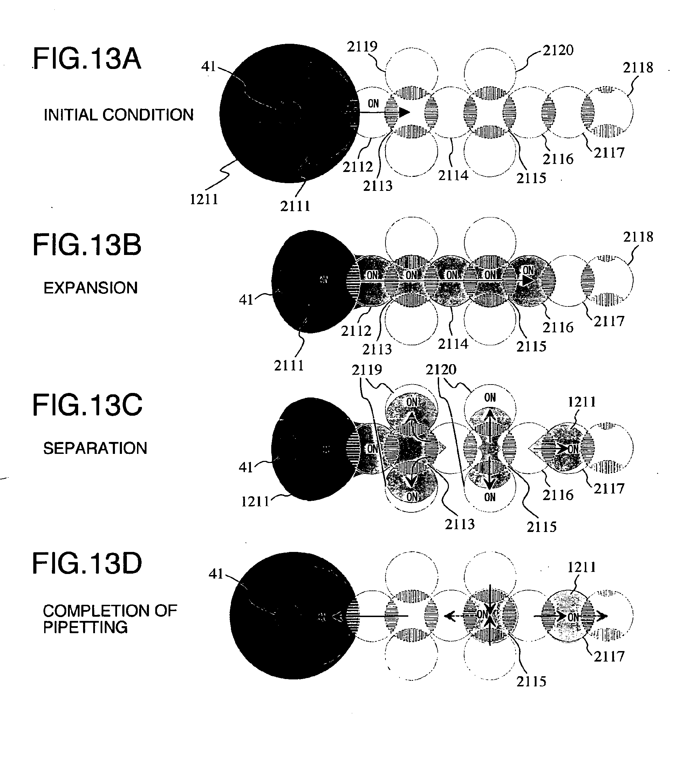

Brief explanation will be hereinbelow made of the flow of the liquid. Detailed explanation thereof will be made later with reference to Fig. 13. A liquid drop 1211 of the sample on the electrode provided in the sample port 11, is displaced along the train 211A of the electrodes, and is separated into liquid droplets which are then carried to a crossing point electrode 211a. Similarly, the liquid drop 1212 of a first reagent on the electrode provided in the reagent port 41A is displaced along the train 211B of the electrodes, and is separated into droplets which are then carried to the crossing point electrode 211a. Thus, the sample and the first reagent are mixed with each other on the electrode 211a. The mixture thereof displaces along the train of electrodes, and is carried onto to a crossing point electrode 211b. Meanwhile, a liquid drop 1213 of a second reagent on the electrode provided in the reagent port 41B is displaced along the train 211C of the electrodes, and is separated into droplets which are then carried to a crossing point electrode 211B. Thus, the mixture and the second reagent are mixed on the crossing point electrode 211b. An optical value of the thus obtained mixture is detected by the detector 95. After the detection, the mixture is displaced along the train of electrodes and is carried to the electrode provided in the waste liquid port 51. The mixture on this electrode is discharged by way of the waste liquid port 51.

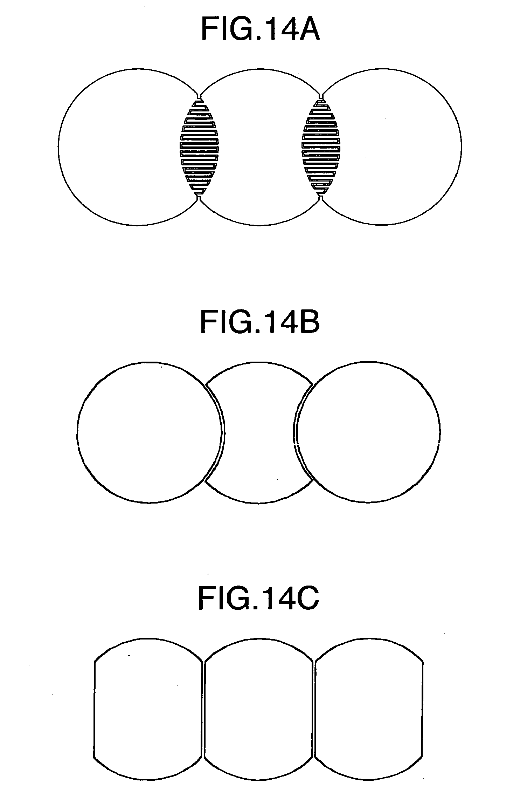

The sizes of the electrodes correspond to the quantity of the liquid drops retained thereby. Accordingly, the electrodes at the ports are large. Further, the crossing point electrodes are relatively large since they retain thereon the mixture of two liquid droplets. In each electrode train, electrodes are provided on opposite sides of each of the electrode having odd number, except those at the ports. These opposite side electrodes have a function of separating the liquid drop. Detailed explanation will be made later. Further, two adjacent electrodes are formed in a comb-like shape so that they are telescopically arranged at their joint. This configuration will be also explained in detail later with reference to Fig. 14.

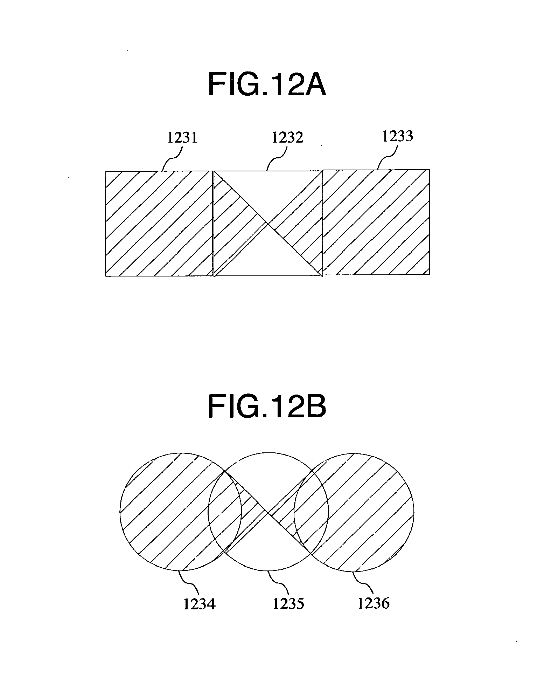

Referring to Figs. 12A to 12B, explanation will be made of the drive electrode according to the present invention in comparison with the conventional one. As shown in Fig. 12A, the conventional drive electrode is composed of rectangular electrodes as disclosed in WO 2004/030820 A2. An example of the drive electrode shown in Fig. 12A is composed of three consecutive square electrodes 1231 to 1233 having an equal area.

As shown in Fig. 12B, the drive electrode according to the present invention is composed of circular electrodes. In the example shown in Fig. 12B, it is composed of three successive circular electrodes 1234 to 1236 having an equal area. Further, two adjacent electrodes are formed so as to be overlapped with each other in order to stably displace the liquid drop from one to the other of the electrodes. When a voltage is applied to the electrodes, the liquid is retained thereon. The liquid is arranged in a circular shape, corresponding to the external shape of the electrode, that is, a circumscribed circle.

The circumferential length of a circle shape is shortest among those of other shapes. Thus, with equal volume of liquid, a circular liquid drop has a smallest surface energy so as to be stable. Thus, in this embodiment, the liquid may be stably retained on the electrode.

In consideration of separation of the liquid drop, when a voltage is applied to the opposite end electrodes while no voltage is applied to the center one, the wettability of the opposite end electrodes is enhanced, and accordingly, the liquid drop (in a hatched part in the figure) is pulled apart by the opposite end electrodes as shown in the figure, and accordingly, the liquid drop is separated. Figs. 12A to 12B typically show a condition at the moment of the separation of the liquid drop on the center electrode.

In the case of the electrodes having an equal area, the circumferential length of the liquid drop shown in Fig. 12B is about 86 % of the circumferential length of the liquid drop shown in Fig. 12A (in such a case that the distance between the centers-of two adjacent circular electrodes is 1.5 times as large as the radius thereof), and accordingly, the surface energy of the liquid drop shown in Fig. 12B is smaller than that shown in Fig. 12A so as to be stable. In the case of the electrodes shown in Fig. 12A, the curvature thereof varies at a corner part of an electrode. Thus, it is difficult to maintain the shape of the liquid in this part, corresponding to the external shape of the electrode. Thus, the shape of the liquid becomes unstable. When the liquid is introduced or separated, the shape of the liquid is indeterminate, and accordingly, the quantities of separated liquid become uneven, resulting in deterioration of pipetting accuracy.

Upon serration, as shown, the liquid remains on the center electrode. The liquid reaming on the center electrode in the case shown in Fig. 12B is of about 27 % of the liquid remaining on the center electrode in the case shown in Fig. 12A. That is, in the example shown in Fig. 12B, since the quantity of the liquid remaining on the center electrode is small, the unevenness among the quantities of the liquid attracted to the opposite electrodes becomes less. Thus, in this embodiment, a desired quantity of the liquid may be precisely retained on the electrode. Thus, in the invention, since the precise amount of the liquid can be retained on the electrode, the precise mixing of the liquid as well as the precise pipetting of the liquid may be surely carried out, thereby it is possible to precisely control the reaction and to reduce measurement error.

Detailed explanation will be hereinbelow made of a method of pipetting the reagent, according to the present invention, with reference to Figs. 13A to 13D which show a drive electrode provided in connection with the reagent port 41. As shown, the drive electrode comprises a first electrode 2111 located to connect with the reagent port 41, a train of electrodes 2112, 2113, 2114, 2115, 2116, 2117, 2118 which are arranged in one row and in succession to the first electrode 2111, two electrodes 2119, 2119 arranged on opposite sides of the electrode 2113, orthogonal to the train of the electrodes, and two electrodes 2120, 2120 arranged on opposite sides of the electrode 2115, orthogonal to the train of the electrodes.

Fig. 13A shows a condition in which the reagent introduced through the reagent port 41 is formed into a circular liquid drop on the first electrode 2111 which is applied with a positive voltage. Next, referring to Fig. 13B, five electrodes 2112, 2113, 2114, 2115, 2116 which are adjacent to each other, are successively applied with respective positive voltages. Thus, the wettabilities of the five electrodes 2112, 2113, 2114, 2115, 2116 are successively increased, and accordingly, the liquid is advanced along the five electrodes in order.

Next, as shown in Fig. 13C, when positive voltages are applied to the opposite electrodes 2119, 2120 and the seventh electrode 2117, the wettabilities of the electrodes 2119, 2120, 2117 are increased. The voltages applied to the four electrodes 2113, 2114, 2115, 2116 are cut off while the positive voltages are still applied to the first and second electrodes 2111, 2112. As indicated by the arrows shown in the figure, a substantial part of the liquid on the sixth electrode 2116 on which the application of the voltage is cut off, is attracted to the adjacent seventh electrode 2117. The liquid on the fifth electrode 2115 on which the application of the voltage is cut off, is attracted to the opposite electrodes 2120, 2120. At this time, the liquid remaining on the sixth electrode 2116 is joined with the liquid on the fifth electrode 2115, and is attracted to the opposite electrodes 2120, 2120.

The liquid on the third electrode 2113 on which the application of the voltage is cut off, is attracted to the adjacent second electrode 2112 and the opposite electrodes 2119, 2119. A substantial part of the liquid on the fourth electrode 2114 on which the application of the voltage is cut off is attracted to the opposite electrodes 2119, 2119 by way of the adjacent third electrode 2113. The remaining liquid on the fourth electrode 2114 is joined with the liquid on the fifth electrode 2115, and is then attracted to the opposite electrodes 2120, 2120.

Finally, as shown in Fig. 13D, a positive voltage is applied to the fifth electrode 2115 while a positive voltage is still applied to the seventh electrode 2117, and the voltages applied to the opposite electrodes 2120, 2120 are cut off. Accordingly, the wettability of the fifth electrode 2115 is enhanced. Thus, the liquid on the opposite electrodes 2110, 2110 are joined together on the fifth electrode 2115.

Next, when a positive voltage is applied to the third electrode 2113 while the voltages applied to the opposite electrodes 2119, 2119 are cut off, the liquid on the electrodes 2119, 2119 are displaced onto the third electrode 2113. Next, when the voltages applied to the third electrode 2113 and the second electrode 2113 are successively cut off, the liquid on the third electrode 2113 and the second electrode 2112 is attracted to the first electrode 2111. Thus, all liquid are joined together on the first electrode 2111, leaving the liquid remaining on the fifth and seventh electrodes 2115, 2117.

Next, a process for displacing the liquid on the seventh electrode 2117 onto the eighth electrode 2118 is executed. A positive voltage is applied to the eighth electrode 2118 while the voltage applied to the seventh electrode 2117 is cut off. Thus, the wettability of the eighth electrode 2118 is enhanced while that of the seventh electrode 2117 is lowered. Thus, the liquid on the seventh electrode 2117 is displaced onto the eighth electrode 2118.

Finally, a process for collecting the liquid on the fifth electrode 2115 into large liquid drop on the first electrode 2111 is executed. When a positive voltage is applied to the adjacent fourth electrode 2114 while the voltage applied to the fifth electrode 2115 is cut off, the wettability of the fourth electrode 2114 is enhanced but the wettability of the fifth electrode 2115 is lowered. Thus, the liquid on the fifth electrode 2115 is displaced onto the fourth electrode 2114. With the repetitions of these steps for the third electrode 2113, the second electrode 2112 and the first electrode 2111, the liquid may be collected.

Although explanation has been hereinabove made of the process of pipetting the reagent, the process of pipetting the sample may be carried out, similar to that for the reagent. With the use of the processes, the sample may be mixed with the reagent as already explained with reference to Fig. 11.

Referring to Figs. 14A to 14C, explanation will be made of the configuration of the joint between two adjacent electrodes. The liquid drop is formed into a shape corresponding to a circumscribed circle depicted by an electrode, and further, it displaces along the shape of the circumscribed circle depicted by the electrode. Thus, it is required to arrange the adjacent electrodes so as to define a smooth curve in order to prevent the circumscribed circles of the adjacent electrodes from being separated from each other. In this embodiment, there is configured such that the circumscribed circles of the two adjacent electrodes are partly overlapped with each other. Thus, with the provision of the overlapped zones, the liquid drop on one of the electrodes may be smoothly displace onto another one of the electrodes.

In an example shown in Fig. 14A, the overlapped zones have a comb-like shape, that is, the comb-like shape of one of the electrodes is telescopically inserted in the comb-like shape of another one of the electrodes. In an example shown in Fig. 14B, both electrodes on opposite sides are circular, but the central electrode has a configuration cut out by the opposite circles. In an example shown in Fig. 14C, the electrodes have such a configuration that each circle is cut out along a straight line connecting crossing points of the two adjacent circles.

As stated above, in this embodiment, the two adjacent electrodes have overlapped zones, and accordingly, the liquid drop may be smoothly displaced.

Although explanation has been made of several embodiments of the present invention, the present inventions should not be limited to these embodiments, and various modifications may be made thereto within the technical scope of the present invention which will be defined by the appended claims.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A chemical analysis apparatus, including an analysis device (2) comprising a first electrode board (23) provided thereon with a common electrode (214), a second electrode board (21) provided thereon with a drive electrode (211) including a train of electrodes (211a, 211b), and a spacer board (22) interposed between both of said electrode boards (23, 21) and defining therebetween a space (24); an oil supply portion (7) for feeding oil (721) into the space (24) in said analysis device (2); a sample pipetting portion (6) for feeding a sample (121) into the space (24) in said analysis device (2); and a reagent pipetting portion (4) for pipetting a reagent (421) into the space (24) in said analysis device (2),
   wherein voltages are applied between the common electrode (214) and the plurality of electrodes (211a, 211b), successively, so as to displace liquid drops (1211) of the sample (121) and the reagent (421) in the oil (721) within said space (24) in order to mix and react them.

2. A chemical analysis as set forth in claim 1, wherein said analysis device (2) is provided with a sample port (11) for introducing the sample (121) into the space (24), a reagent port (41) for introducing the reagent (421) into the space (24), a discharge port (51) for discharging the sample (121), the reagent (421) and the oil (721) from the space (24), and a detecting portion (95) for detecting optical characteristics of a reacted solution between the sample (121) and the reagent (421), and said drive electrode (211) introduces the sample (121) fed to the sample port (11) to a predetermined position, introduces the reagent (421) fed to the reagent port (41) to the predetermined position where the sample (121) is led so as to mix the reagent (421) with the sample (121), and introduces the reacted solution therebetween to a position where the detecting portion (95) is located, and also introduces the reacted solution to the discharge port (51) after the detection.

3. A chemical analysis as set forth in claim 2, wherein a voltage is applied between one of the plurality of electrodes (211a, 211b) in the drive electrode (211) and a nozzle (43) for feeding the reagent (421) when the nozzle (43) is inserted into the reagent port (41).

4. A chemical analysis as set forth in claim 2 or 3, further comprising a reagent container (42) for reserving the reagent (421), and a nozzle (43) provided to the reagent container (42), wherein a voltage is applied between said reagent container (42) and said nozzle (43) when said nozzle (43) is inserted into said reagent port(41).

5. A chemical analysis apparatus as set forth in claim 2, 3 or 4 further comprising a separator (8) for separating and removing impurities from said predetermined solution discharged from said discharge port (51).

6. A chemical analysis apparatus as set forth in at least one of claims 2-5, wherein one of said two electrode boards (23, 21) is provided with a liquid level detecting port (791) communicated with said space (24) and a liquid level sensor (792) for detecting a level of the predetermined solution in the liquid level detecting port (791) is provided.

7. A chemical analysis apparatus as set forth in at least one of the preceding claims, wherein said first board (23) is provided at its inner surface with a water repelling film (213) so as to cover the common electrode (214), and said second board (21) is provided at its inner surface with an insulator film (212) so as to cover said drive electrode (211), and further provided with a water repelling film (213) on the insulator film (212).

8. A chemical analysis apparatus as set forth in at least one of the preceding claims, further comprising an inclination sensor (91) for detecting an inclination of the boards (23, 21) with respect to a horizontal plane, and an inclination adjusting portion (90) for adjusting the boards (23, 21) by a predetermined angle with respect to the horizontal plane, wherein an inclination detected by the inclination sensor (91) is delivered to the inclination adjusting portion (90).

9. An analysis device comprising a first and a second boards (23, 21) which are arranged being opposed to each other so as to define a space (24) therebetween, a common electrode (214) provided on the first board (23), and a drive electrode (211) provided on the second electrode board (21) and including a train (211A, 211B, 211C, 211D) of a plurality of circular electrodes (211a, 211b), wherein a predetermined solution which is not mixed with a sample (121) and a reagent (421) is filled in the space (24) while voltages are applied between the common electrode (214) and the plurality of electrodes (211a, 211b), successively, so as to displace liquid drops of the sample (121) and the reagent (421) along the drive electrode (211) within the predetermined solution in the space (24) in order to mix and react the sample (121) and reagent (421).

10. An analysis device as set forth in claim 9, wherein the circular electrodes (2111-2120) are configured so as to have zones where adjacent electrodes are overlapped with each other.

11. An analysis device as set forth in claim 9 or 10, wherein a comb-like shape part of one of electrodes (2111-2120) and a comb-like shape part of the other one of the electrodes (2111-2120) are telescopically arranged in the overlapped zone.

12. An analysis device as set forth in claim 10 or 11, wherein one of circles of the electrodes (2111-2120) is cut out by the other of the circles in the overlapped zone.

13. An analysis device as set forth in at least one of claims 10-12, wherein circles of the electrodes (2111-2120) are cut out by a line segment connecting between crossing points of the two circles in the overlapped zone.

14. An analysis device as set forth in at least one of claims 9-13, wherein the drive electrode (211) comprises circular main electrodes (2111-2118) formed along a path for displacing thereon the liquid drops of the sample (121) and the reagent (421), and circular side electrodes (2119, 2129) formed on opposite sides of the main electrodes, voltages are applied to the main electrodes, successively, then, voltages are applied to the side electrodes while the voltages applied to the main electrodes are cut off, thereafter a voltage is applied to a circular electrode interposed between the side electrodes, and the voltage applied to the circular electrode is cut off.

15. A chemical analysis comprising the analysis device as set forth in at least one of claims 9-14, a rotatable sample disc (1) carrying thereon a plurality of sample cups (12) for retaining therein a sample (121), a sample pipetting portion (6) for feeding the sample (121) into the space (24) in the analysis device (2), and a reagent pipetting portion (4) for feeding a reagent (421) into the space (24) in the analysis device (2).

# FIG.1

# FIG.2

# FIG.3

# FIG.4A

# FIG.4B

# FIG.5

# FIG.6

## FILLING NOZZLE

# FIG.7

## INTRODUCTION INTO DEVICE

421

2111

463

# FIG.8

EXPANSION

421

2111

2112

463

464

# FIG.9

SEPARATION

## FIG.10

## FIG.11

# FIG.12A

1231          1232          1233

# FIG.12B

1234          1235          1236

# FIG.13A

INITIAL CONDITION

# FIG.13B

EXPANSION

# FIG.13C

SEPARATION

# FIG.13D

COMPLETION OF
PIPETTING

## FIG.14A

## FIG.14B

## FIG.14C